# EUROPÄISCHE PATENTSCHRIFT

(11) **EP 4 330 121 B1**
(45) Veröffentlichungstag und Bekanntmachung des Hinweises auf die Patenterteilung: **29.04.2026**
(21) Anmeldenummer: 22708117.1
(22) Anmeldetag: 24.02.2022
(51) Int. Cl.: B62M 6/50, B62J 45/413, B62J 45/411, B62M 11/14, B62M 6/55

(54) **ANTRIEBSVORRICHTUNG FÜR EIN ELEKTROFAHRRAD UND ELEKTROFAHRRAD**
DRIVE DEVICE FOR AN ELECTRIC BICYCLE, AND ELECTRIC BICYCLE
DISPOSITIF D'ENTRAÎNEMENT POUR UNE BICYCLETTE ÉLECTRIQUE ET BICYCLETTE ÉLECTRIQUE

(30) Priorität: 27.04.2021 DE 102021110725
(43) Veröffentlichungstag der Anmeldung: 06.03.2024
(73) Patentinhaber: Porsche eBike Performance GmbH, 85521 Ottobrunn (DE)
(72) Erfinder: BIECHELE, Johannes, 85521 Ottobrunn (DE); THORWART, Julius, 85521 Ottobrunn (DE)
(74) Vertreter: Völkl Siebenson Patentanwälte - Partnerschaft mbB
(86) Internationale Anmeldenummer: PCT/EP2022/054663
(87) Internationale Veröffentlichungsnummer: WO 2022/228746

(56) Entgegenhaltungen:
- EP-A1- 0 700 825
- EP-A1- 2 939 916
- EP-A1- 3 480 102
- CN-A- 106 627 965

## Beschreibung

Antriebsvorrichtung für ein Elektrofahrrad und Elektrofahrrad Die Erfindung betrifft eine Antriebsvorrichtung für ein Elektrofahrrad und ein Elektrofahrrad mit einer solchen Antriebsvorrichtung.

Fahrräder realisieren kostengünstige, leicht zu handhabende und emissionsfreie Fortbewegungsmittel. Sie haben auch als Sport- bzw. Fitnessgeräte Verbreitung gefunden, und es haben sich für unterschiedliche sportliche Einsatzfelder besonders geeignete Typen herausgebildet.

In den letzten Jahren wächst die Begeisterung für Elektrofahrräder (insb. sogenannte "Pedelecs"), und das auch trotz der für Fahrräder hohen Gewichte und Preise.

Potenzielle Kunden sind nicht nur ältere, weniger konditionsstarke oder von sportlichen Ambitionen freie Radfahrer, sondern auch sportliche, jüngere Fahrer, sei es zur Nutzung auf dem Arbeitsweg oder wegen der Möglichkeit, mit ihnen ohne Überbeanspruchung der eigenen Physis den Aktionsradius zu erweitern und/oder die Reisegeschwindigkeit zu erhöhen. Gerade bei Mountainbikern scheint das Interesse an elektrisch unterstützten Mountainbikes zu wachsen. Bei Elektrofahrrädern ist es ein Anliegen, ein zuverlässig unterstützendes Antriebssystem bereitzustellen, welches eine hohe Leistungsübertragung ermöglicht.

Beispiele von Antriebsvorrichtungen für Elektrofahrräder sind in den Dokumenten EP 3 480 102 A1, EP 0 700 825 A1, EP 2 939 916 A1 und CN 106 627 965 A zu finden. Davon offenbart EP 3 480 102 A1 die Merkmale der Präambel des Anspruchs 1.

Es ist eine Aufgabe, die der Erfindung zugrunde liegt, ein zuverlässiges Antriebskonzept für Elektrofahrräder zu schaffen, welches einen besonders übersichtlichen und platzsparenden Aufbau ermöglicht.

Gemäß einem Aspekt wird eine Antriebsvorrichtung für ein Elektrofahrrad offenbart. Die Antriebsvorrichtung weist eine Motoreinheit mit einem Elektromotor zum Antreiben des Elektrofahrrads auf. Die Antriebsvorrichtung weist ferner eine Tretkurbelwelle auf, die um eine Rotationsachse drehbar ist. Außerdem weist die Antriebsvorrichtung ein Getriebe auf, das zum Antreiben des Elektrofahrrads ausgebildet und einerseits mit der Motoreinheit und anderseits mit der Tretkurbelwelle gekoppelt ist und das dazu eingerichtet ist, ein Drehmoment zum Antreiben des Elektrofahrrads abzugeben, wobei die Tretkurbelwelle zweiteilig ausgebildet ist und ein erstes Teilelement und ein separates zweites Teilelement aufweist, die miteinander gekoppelt sind, wobei die Motoreinheit als Ringmotor ausgebildet ist und in Bezug auf die Rotationsachse der Tretkurbelwelle koaxial um diese angeordnet ist, sodass der Ringmotor die Tretkurbelwelle koaxial umgibt, und wobei die Tretkurbelwelle einen Lagersitz für den Ringmotor ausbildet.

Mittels der beschriebenen Antriebsvorrichtung ist ein zuverlässiges Antriebskonzept für Elektrofahrräder realisierbar, welches einen besonders und platzsparenden Aufbau ermöglicht. Insbesondere aufgrund der geteilten Tretkurbelwelle ist ein kompakter Aufbau mit radial anordenbarer Motoreinheit und Getriebe realisierbar, welcher zudem die Verwendung moderner Kurbelstandards von Tretkurbeln von Elektrofahrrädern ermöglicht. Die beschriebene Antriebsvorrichtung ist insbesondere als elektrisches Fahrradantriebssystem zur Montage an ein Unterrohr oder an ein Sitzrohr des Elektrofahrrads geeignet.

Gemäß einer Ausführungsform der Antriebsvorrichtung ist das Getriebe als Planetengetriebe mit einem Sonnenrad und mindestens einem Planetenrad ausgebildet und ist in Bezug auf die Rotationsachse der Tretkurbelwelle koaxial um diese angeordnet, sodass das Planentengetriebe die Tretkurbelwelle koaxial umgibt. Somit kann das Planetengetriebe radial und platzsparend angeordnet werden. Das Planetengetriebe kann einstufig oder mehrstufig eingerichtet sein.

Gemäß einer weiteren Ausführungsform der Antriebsvorrichtung bildet die Tretkurbelwelle einen Lagersitz für das Planetengetriebe. Auf diese Weise können die Komponenten radial und besonders platzsparend angeordnet werden, indem dies zum Beispiel unter Verwendung von Kugel- und/oder Wälzlagern mit der Tretkurbelwelle gekoppelt werden.

Gemäß einer bevorzugten Ausführungsform der Antriebsvorrichtung ist die Tretkurbelwelle bezogen auf die Rotationsachse in einem mittleren Abschnitt schmaler ausgebildet als in einem Endabschnitt. Zum Beispiel weist die Tretkurbelwelle in dem mittleren Abschnitt einen Durchmesser von einschließlich 10-23 mm auf und in dem Endabschnitt einen Durchmesser von einschließlich 23-35 mm auf.

Insbesondere aufgrund der zweiteiligen Ausführung der Tretkurbelwelle kann diese in dem mittleren Abschnitt deutlich dünner oder schmaler ausgebildet werden als an den äußeren Endabschnitten. Darüber hinaus kann die Tretkurbelwelle auch dreiteilig, vierteilig oder mehrteilig ausgebildet sein. Das erste Teilelement und das zweite Teilelement weisen jeweils zwei Endabschnitte auf, von denen einer auch einen Endabschnitt und der andere einen mittleren Abschnitt der Tretkurbelwelle ausbildet. Mit dem jeweiligen Endabschnitt, welche den mittleren Abschnitt der Tretkurbelwelle ausbilden, werden die Teilelemente miteinander gekoppelt, beispielsweise zusammengesteckt, verpresst, verschweißt und/oder verschraubt. Somit wird der mittlere Abschnitt der zusammengebauten Tretkurbelwelle ausgebildet, der deutlich schmaler ausgeführt sein kann als die beiden Endabschnitte, welche dafür vorgesehen sind, mit Tretkurbeln eines Elektrofahrrads verbunden zu werden.

Im Hinblick auf die Ausführungen des Getriebes als Planetengetriebe und der Motoreinheit als Ringmotor können diese Komponenten auf den schmaleren Endabschnitt eines oder beider Teilelemente aufgesteckt oder aufgeschoben werden, bevor die Teilelement miteinander gekoppelt werden. Entsprechend kann ein Verfahren zum Herstellen der Antriebsvorrichtung ein Bereitstellen und ein Koppeln der jeweiligen Komponenten umfassen. Beispielsweise wird die Motoreinheit als Ringmotor auf einen schmaleren Endabschnitt des ersten Teilelements aufgeschoben und daraufhin auch das Planetengetriebe radial um diesen herum angeordnet. Nachfolgend kann ein schmalerer Endabschnitt des zweiten Teilelements mit dem schmaleren Endabschnitt des ersten Teilelements fest verbunden werden.

Gemäß einer weiteren bevorzugten Ausführungsform der Antriebsvorrichtung sind das erste Teilelement und/oder das zweite Teilelement zumindest in einem Kopplungsbereich hülsenförmig ausgebildet, sodass sich zumindest eines der beiden Teilelemente in das andere erstreckt. Der Kopplungsbereich bildet dabei den Bereich der zu verbindenden Endabschnitte der Teilelemente, die einen mittleren Abschnitt der Tretkurbelwelle ausbilden und insbesondere schmaler als die anderen Endabschnitte ausgeführt sein können. Das oder die Teilelemente können durchgehend oder nur abschnittsweise hülsenförmig ausgebildet sein.

Gemäß einer weiteren bevorzugten Ausführungsform der Antriebsvorrichtung sind das erste und zweite Teilelement mittels einer vorgegebenen Kopplungsstruktur miteinander gekoppelt, welche die beiden Teilelemente formschlüssig, kraftschlüssig und/oder stoffschlüssig miteinander verbindet. Eine solche Kopplungsstruktur kann auch ein Schraubenelement umfassen, das sich entlang der Rotationsachse in die beiden Teilelemente hinein erstreckt und diese miteinander verschraubt. Alternativ oder zusätzlich kann die Kopplungsstruktur so ausgebildet sein, dass ein Teilelement einen hervorspringenden oder erhabenen Bereich aufweist, welcher in Abstimmung auf eine korrespondierende Ausnehmung an dem anderen Teilelement vorgegeben ausgebildet ist. Beispielsweise sind an einer äußeren Oberfläche des ersten Teilelements ein oder mehrere Zapfen ausgebildet, die in entsprechend ausgeführte Ausnehmungen an einer inneren Oberfläche des hülsenförmig ausgebildeten zweiten Teilelements eingreifen. Somit kann ein zuverlässiger Halt der beiden Teilelemente miteinander realisiert werden, welcher eine gewisse Positionsvorgabe der beiden Teilelemente vorgeben kann, die zusätzlich noch verschraubt, verklebt und/oder verschweißt werden können.

Gemäß einer weiteren bevorzugten Ausführungsform weist die Antriebsvorrichtung ferner eine Drehzahlsensoreinheit auf, die einen Drehzahlsensor und eine Drehzahlscheibe umfasst, wobei die Drehzahlscheibe um die Rotationsachse drehbar mit der Tretkurbelwelle gekoppelt ist. Die Drehzahlscheibe weist zum Beispiel in Bezug auf die Rotationsachse eine spiralförmige oder eine helixförmige Kontur auf und der Drehzahlsensor ist in Abhängigkeit von der Kontur der Drehzahlscheibe so angeordnet, dass in Bezug auf die Rotationsachse eine radiale oder axiale Drehzahlerfassung eingerichtet ist. Die Drehzahlsensoreinheit weist zum Beispiel einen Drehzahlsensor in Ausführung eines HallSensors auf, welcher eine hohe, nahezu stufenlose Abtastrate auf Basis des Hall-Effekts und zu messender Magnetfelder ermöglicht. Alternativ oder zusätzlich kann die Drehzahlsensoreinheit auch so ausgebildet sein, dass ein anderes Drehzahlmesserverfahren durchführbar ist, zum Beispiel mittels einer magnetisierten Drehzahlscheibe.

Die Antriebsvorrichtung kann ferner ein Motorgehäuse aufweisen, in dem die Motoreinheit und das Getriebe angeordnet sind und durch das sich die Tretkurbelwelle erstreckt. Die Drehzahlscheibe ist dann vorzugsweise außerhalb des Motorgehäuses angeordnet bezogen auf die Rotationsachse. Somit können zum Beispiel die Motoreinheit und das Getriebe, insbesondere in Ausführung als Ringmotor und Planetengetriebe, besonders platzsparend um den schmalen mittleren Abschnitt der Tretkurbelwelle in dem Motorgehäuse platziert werden. Die Endabschnitte der Tretkurbelwelle erstrecken sich dann zum Beispiel bis nach außerhalb des Motorgehäuses und können insbesondere auch als Lagersitz für das Motorgehäuse ausgebildet sein und Kantensprünge oder eine Stufenform aufweisen, die zu eine vorgegebene Position des Motorgehäuses relativ zu der Tretkurbelwelle definieren und zudem einem stabilen und sicheren Halt beitragen können.

Der Drehzahlsensor kann ebenfalls außerhalb des Motorgehäuses angeordnet werden oder sich in dem Motorgehäuse befinden und so positioniert sein, dass er eine zuverlässige Messung im Zusammenwirken mit der außen befindlichen Drehzahlscheibe ermöglicht. Dadurch, dass die Drehzahlscheibe und gegebenenfalls auch der Drehzahlsensor außerhalb des Motorgehäuses positioniert sind, ist eine einfachere Zugänglichkeit gegeben und es kann eine nutzbringende Servicebarkeit der Drehzahlscheibe bzw. des Drehzahlsensors eingerichtet werden.

Gemäß einer weiteren Ausführungsform weist die Antriebsvorrichtung eine Abdeckung auf, welche die Drehzahlscheibe abdeckt und mit dem Motorgehäuse gekoppelt ist, sodass die Drehzahlscheibe zwischen der Abdeckung und dem Motorgehäuse angeordnet ist. Somit kann die Drehzahlscheibe zuverlässig und sicher außerhalb des Motorgehäuses angeordnet und gegen unerwünschte äußere Einflüsse gesichert werden. Die Drehzahlscheibe ist dann zum Beispiel mit dem außen befindlichen Endabschnitt des ersten Teilelements der Tretkurbelwelle verbunden und in Bezug auf einen an dem Elektrofahrrad montierten Zustand zwischen der Tretkurbel und dem Motorgehäuse drehbar gelagert.

Die Antriebsvorrichtung kann ferner einen Drehmomentsensor aufweisen, der in Bezug auf die Rotationsachse außerhalb des Motorgehäuses angeordnet ist. Ferner kann ein Kettenblattsystem vorgesehen sein, das zum Antreiben des Elektrofahrrads mit der Tretkurbelwelle gekoppelt ist, wobei der Drehmomentsensor in dem Kettenblattsystem integriert ist. Der Drehmomentsensor außerhalb des Motorgehäuses integriert in dem Spider ermöglicht weiter einen kompakten Gehäusebauraum und somit ein besonders schlankes Rahmendesign sowie aufgrund seiner einfacheren Zugänglichkeit eine nutzbringende Servicebarkeit des Drehmomentsensors. Das Kettenblattsystem weist eine Mehrzahl von miteinander gekoppelten Kettenblättern oder Zahnrad-förmigen Elementen auf und kann auch mit dem englischen Begriff "Spider" bezeichnet werden. Der Drehmomentsensor überwacht dann insbesondere eine Relativbewegung von ineinandergreifenden Strukturen des Kettenblattsystems und ermöglicht ein sicheres Betreiben des Elektrofahrrads mit verbessertem Fahrtkomfort.

Die beschriebenen Ausführungsformen der Antriebsvorrichtung ermöglichen jeweils ein kompaktes, leichtes und/oder günstig herzustellendes elektrisches Antriebssystem für ein Elektrofahrrad. Insbesondere in Ausführung mit einem Ringmotor und einem Planetengetriebe, die koaxial um eine schmale Mitte der Tretkurbelwelle angeordnet sind, welche zudem als Lagersitz fungieren kann, ist durch Funktionsintegration ein besonders platzsparender und robuster Aufbau der Antriebsvorrichtung möglich. Vorzugsweise ist ferner ein Drehzahlsensor mit einer Drehzahlscheibe vorgesehen, die als Helix oder Spirale oder als Vielzahnrad ausgebildet und außerhalb des Gehäusebauraums des Motorgehäuses angeordnet ist, sodass weiter zu einem schlanken Rahmendesign des Elektrofahrrads beigetragen werden kann.

Gemäß einem weiteren Aspekt wird ein Elektrofahrrad offenbart, das einen Fahrradrahmen mit einem unteren Rahmenabschnitt aufweist, der sich zu einem Tretlager mit einer Tretkurbel erstreckt. Das Elektrofahrrad weist eine Antriebsvorrichtung nach einer der zuvor beschriebenen Ausführungsformen auf, die in oder an dem Rahmenabschnitt angeordnet ist, sodass die Tretkurbelwelle mit der Tretkurbel gekoppelt ist und mittels des Getriebes ein Drehmoment zum Antreiben des Elektrofahrrads übertragbar ist. Das Elektrofahrrad ermöglicht im Wesentlichen die zuvor genannten Eigenschaften, Vorteile und Funktionen.

Zur Anbringung an dem Rahmenabschnitt weist dieser beispielsweise eine Aussparung aus, sodass die Antriebsvorrichtung zuverlässig aufgenommen werden kann. Gemäß einer Ausführungsform ist die Antriebsvorrichtung zum Beispiel als Baugruppe im bereits gekoppelten Zustand an dem Rahmenabschnitt angeordnet, insbesondere montiert.

Die Antriebsvorrichtung ermöglicht ein effizientes und platzsparendes mechanisches System zum Unterstützen beim Fahrradfahren. Dies wird insbesondere durch die zwei- oder mehrteilige Ausführung der Tretkurbelwelle ermöglicht, die dadurch in einem inneren oder mittleren Abschnitt mit einem deutlich kleineren Außendurchmesser ausgebildet werden kann als an den außen befindlichen Endabschnitten.

Ausführungsformen, Vorteile und Funktionen werden in der nachfolgenden Beschreibung anhand von Ausführungsbeispielen unter Zuhilfenahme der angehängten Figuren erläutert. In den Figuren zeigen:
- Figur 1: eine schematische Ansicht eines Elektrofahrrads mit einer montierten Antriebsvorrichtung,
- Figur 2: eine schematische Schnittdarstellung eines Ausführungsbeispiels der Antriebsvorrichtung für das Elektrofahrrad,
- Figur 3: eine weitere schematische Schnittdarstellung von Komponenten der Antriebsvorrichtung nach Figur 2, und
- Figuren 4-5: schematische Ausführungsbeispiele einer Drehzahlsensoreinheit der Antriebsvorrichtung nach Figur 2.

Gleiche, gleichartige oder gleichwirkende Elemente sind in den Figuren mit den gleichen Bezugszeichen versehen. Aus Gründen der Übersichtlichkeit sind gegebenenfalls nicht in sämtlichen Figuren alle dargestellten Elemente mit zugehörigen Bezugszeichen gekennzeichnet.

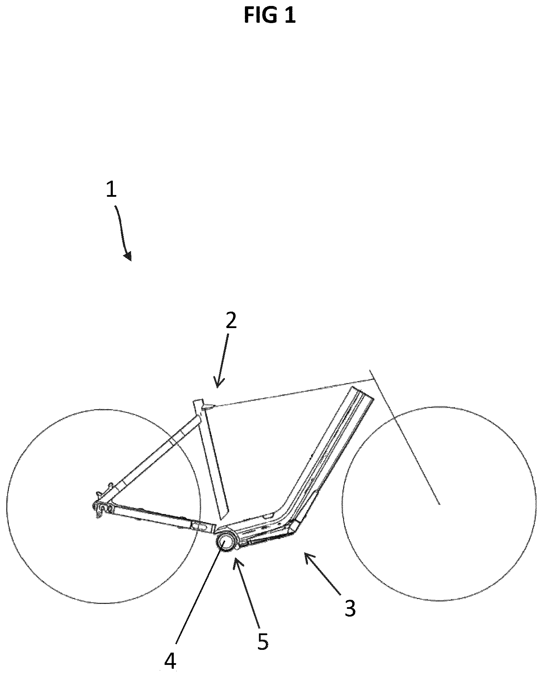

Figur 1 zeigt schematisch ein Elektroahrrad 1 mit einem Fahrradrahmen 2, welcher unter anderem einen unteren Rahmenabschnitt 3 aufweist, welcher ein Unterrohr ausbildet. Der Rahmenabschnitt 3 erstreckt sich in Richtung eines Tretlagers, welches eine Tretkurbel 4 umfasst, die mit einer elektrischen Antriebsvorrichtung 5 für das Elektrofahrrad 1 gekoppelt ist oder koppelbar ist.

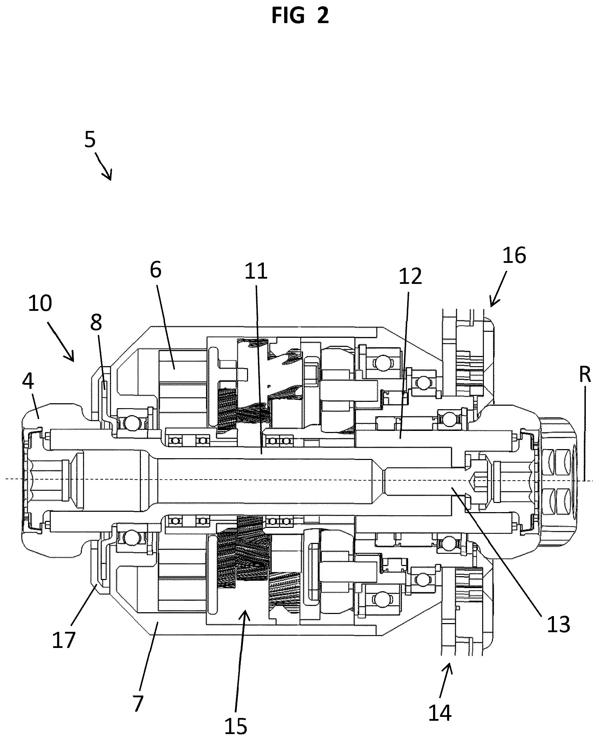

Die Figuren 2-5 zeigen schematisch ein Ausführungsbeispiel der Antriebsvorrichtung 5 oder von Komponenten der Antriebsvorrichtung 5. Figur 2 zeigt eine Schnittdarstellung durch die Antriebsvorrichtung 5, die unter anderem eine Motoreinheit mit einem Elektromotor umfasst, welche als Ringmotor 6 zum Antreiben des Elektrofahrrads 1 ausgebildet ist. Die Antriebsvorrichtung 5 umfasst weiter eine Tretkurbelwelle, die um eine Rotationsachse R drehbar ist und die zweiteilig ausgebildet ist und ein erstes Teilelement 11 und ein zweites Teilelement 12 aufweist, die miteinander gekoppelt sind.

Die Antriebsvorrichtung 5 weist ferner ein Getriebe auf, das als Planetengetriebe 15 mit einem Sonnenrad und mindestens einem Planetenrad zum Antreiben des Elektrofahrrads 1 ausgebildet ist. Das Planetengetriebe 15 ist einerseits mit dem Ringmotor 6 und anderseits mit der Tretkurbelwelle 11, 12 gekoppelt und dazu eingerichtet, ein Drehmoment zum Antreiben des Elektrofahrrads 1 abzugeben.

Das Planetengetriebe 15 und der Ringmotor 6 sind jeweils in Bezug auf die Rotationsachse R der Tretkurbelwelle 11, 12 koaxial um diese angeordnet, sodass sie die Tretkurbelwelle 11, 12 koaxial umgeben. Die Tretkurbelwelle 11, 12 bildet dabei einen Lagersitz für das Planetengetriebe 15 und den Ringmotor 6 aus. Insbesondere dadurch, dass die Tretkurbelwelle 11, 12 in einem mittleren Abschnitt schmaler ausgebildet ist als an ihren Endabschnitten, ist ein besonders platzsparender und übersichtlicher Aufbau der Antriebsvorrichtung 5 realisierbar.

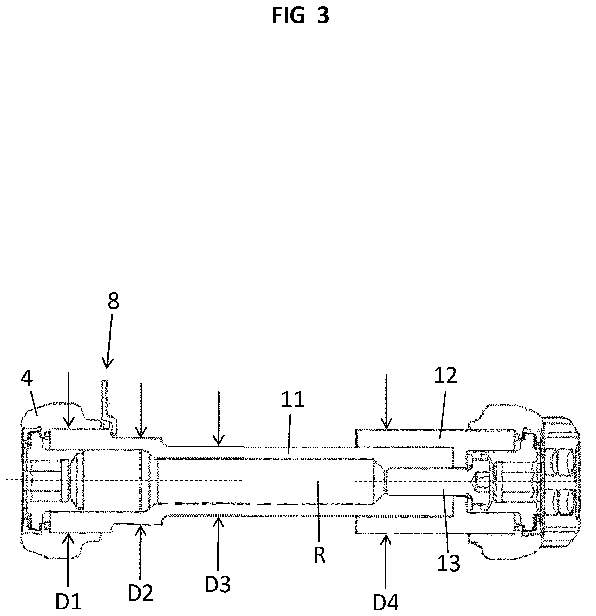

Figur 3 zeigt in einer übersichtlicheren Darstellung eine mögliche Ausgestaltung der zweiteiligen Tretkurbelwelle 11, 12 nach Figur 2. Die beiden Teilelemente 11 und 12 weisen jeweils zwei Endabschnitte auf, von denen einer dem jeweils anderen Teilelement 11, 12 zugewandt ist und der andere jeweils einen äußeren Endabschnitt der zusammengesetzten Tretkurbelwelle ausbildet. Die beiden äußeren Endabschnitte sind mit den Tretkurbeln 4 des Elektrofahrrads 1 verbunden.

Das erste Teilelement 11 ist in dem Abschnitt, welcher mit dem zweiten Teilelement 12 gekoppelt ist, deutlich schmaler ausgestaltet als in seinem gegenüberliegendem Endabschnitt. Zum Beispiel weist das erste Teilelement 11 an dem äußeren Endabschnitt einen Durchmesser D1 auf, der größer ist als ein Durchmesser D2 eines nach innen orientierten anschließenden Bereichs. An diesem Bereich schließt ein weiter Abschnitt des ersten Teilelements 11 an, welcher einen Durchmesser D3 aufweist, der kleiner als der Durchmesser D2 ist. Die verschiedenen Durchmesser D1-D3 sind insbesondere im Hinblick auf die Anordnungen der zusammenwirkenden Komponenten der Antriebsvorrichtung 5 vorgegeben ausgebildet. Das erste Teilelement 11 ist hülsenförmig ausgebildet, sodass sich die beschriebenen Durchmesser D1-D3 auf Außendurchmesser einer solchen Wellenhülse beziehen.

Das zweite Teilelement 12 ist ebenfalls hülsenförmig ausgestaltet und weist einen vorgegebenen Außendurchmesser D4 auf, der zum Beispiel dem Durchmesser D1 entspricht. In dem Abschnitt, welcher mit dem ersten Teilelement 11 gekoppelt ist, weist das zweite Teilelement 12 bevorzugt einen Innendurchmesser auf, welcher im Wesentlichen dem Durchmesser D3 des ersten Teilelements 11 entspricht und nur geringfügig kleiner ausgebildet ist. Somit kann sich das erste Teilelement 11 in das zweite Teilelement 12 erstrecken und mit diesem ineinander gesteckt, verpresst und/oder verschweißt sein.

Die Tretkurbelwelle weist zum Beispiel in dem mittleren Abschnitt die Durchmesser D2 und D3 des ersten Teilelements 11 auf, die beispielsweise einen Wert zwischen einschließlich 15 -23 mm besitzen. In den äußeren Endabschnitten, die einerseits dem Bereich des ersten Teilelements 11 mit dem Durchmesser D1 und andererseits dem Bereich des zweiten Teilelements 12 mit dem Durchmesser D4 entsprechen, weist die Tretkurbelwelle zum Beispiel jeweils eine Ausdehnung von einschließlich 23-35 mm auf.

Die beiden Teilelemente 11 und 12 sind mittels eines Schraubenelements 13 miteinander gekoppelt, das sich entlang der Rotationsachse R durch das zweite Teilelement 12 in das erste Teilelement 11 hinein erstreckt und die beiden Teilelemente 11, 12 miteinander verschraubt. Das erste Teilelement 11 weist diesbezüglich an einer Innenseite ein Gewindeabschnitt auf, welches mit dem Schraubenelement 13 zusammenwirkt. Das zweite Teilelement 12 ist gemäß einer solchen Ausgestaltung vorzugsweise als Wellenhülse mit einer Querwand ausgebildet, die in Abstimmung auf das Schraubenelement 13 eine Durchgangsöffnung aufweist. Gemäß dem in den Figuren 2 und 3 in Schnittdarstellung illustrierten Ausführungsbeispiel entspricht eine solche Wellenhülse einem auf der Seite liegendem Buchstaben "H".

Alternativ oder zusätzlich können das erste und das zweite Teilelement 11, 12 mittels einer weiteren Kopplungsstruktur miteinander gekoppelt sein, welche die beiden Teilelemente 11, 12 formschlüssig, kraftschlüssig und/oder stoffschlüssig miteinander koppelt.

Darüber hinaus weist die Antriebsvorrichtung 5 eine Drehzahlsensoreinheit 10 und einen Drehmomentsensor 14 auf, die jeweils außerhalb eines Motorgehäuses 7 angeordnet sind.

In dem Motorgehäuse 7 sind der Ringmotor 6 und das Planetengetriebe 15 angeordnet. Die Tretkurbelwelle 11, 12 erstreckt sich durch das Motorgehäuse 7. Das Motorgehäuse 7 dient dem Schutz des Ringmotors 6, des Planetengetriebes 15 sowie weiterer damit zusammenwirkender Elemente, wie Kugel-oder Wälzlager. Zudem ermöglicht das Motorgehäuse 7 eine zuverlässige Anbindung der Antriebsvorrichtung 5 an dem Fahrradrahmen 2 bzw. dem Rahmenabschnitt 3.

Die Drehzahlsensoreinheit 10 umfasst einen Drehzahlsensor 9 und eine Drehzahlscheibe 8, wobei letztere um die Rotationsachse R drehbar mit der Tretkurbelwelle 11, 12 gekoppelt ist (s. Figur 2). Die Drehzahlscheibe 8 ist in Bezug auf die Rotationsachse R außerhalb des Motorgehäuses 7 zwischen der Tretkurbel 4 und dem Motorgehäuse 7 angeordnet. Die Drehzahlscheibe 8 ist an einer vorgegebenen Position an dem Endabschnitt mit der Tretkurbelwelle 11, 12 verbunden, in welchem das erste Teilelement 11 seine Abmessung von D1 auf D2 ändert. Ein solcher Übergang kann schräg, kantig oder gekrümmt erfolgen und insbesondere auf ein Anbinden der Drehzahlscheibe 8 abgestimmt sein. Die Antriebsvorrichtung 5 weist außerdem eine Abdeckung 17 auf, welche die Drehzahlscheibe 8 abdeckt und vor äußeren Einflüssen schützt. Die Abdeckung 17 ist mit dem Motorgehäuse 7 gekoppelt, sodass die Drehzahlscheibe 8 zwischen der Abdeckung 17 und dem Motorgehäuse 7 angeordnet ist.

Der Drehmomentsensor 14 ist in einem Kettenblattsystem 16 integriert, das zum Antreiben des Elektrofahrrads 1 mit der Tretkurbelwelle 11, 12 gekoppelt ist und eine Mehrzahl von Kettenblättern oder Zahnrad-förmigen Elementen aufweist, die ein manuelles Betreiben des Elektrofahrrads 1 und ein Zuschalten der elektrischen Antriebsvorrichtung 5 einleiten, um den Fahrer des Elektrofahrrads 1 bei Bedarf zu unterstützen.

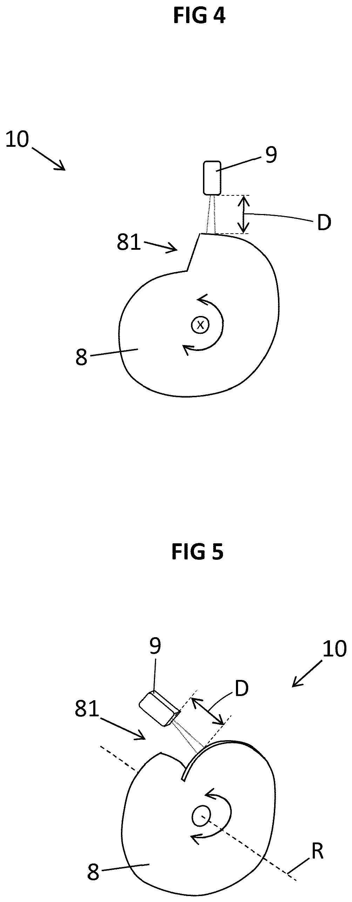

Die Figuren 4 und 5 gezeigten Ausführungsbeispiele der Drehscheibe 8, die in Bezug auf die Rotationsachse R eine spiralförmige (s. Figur 4) oder eine helixförmige Kontur (s. Figur 5) aufweisen kann. Der Drehzahlsensor 9, der zum Beispiel als Hall-Sensor realisiert ist, ist in Abhängigkeit von der Kontur der Drehzahlscheibe 8 so angeordnet, dass in Bezug auf die Rotationsachse R eine radiale Drehzahlerfassung (s. Figur 4) oder eine axiale Drehzahlerfassung (s. Figur 5) eingerichtet ist.

Die radiale Drehzahlerfassung ist in Figur 4 schematisch illustriert und erfolgt durch Abstandsmessung der sich drehenden Drehzahlscheibe 8 in einer Richtung quer zu der Rotationsachse R, insbesondere senkrecht zu dieser. Die Drehzahlscheibe 8 weist an ihrem Umfang eine Kante oder eine Stufenkontur 81 auf, die mittels des Drehzahlsensors 9 zuverlässig erkannt werden kann. Ein Abstand D zwischen dem Drehzahlsensor 9 und der Kontur der Drehzahlscheibe 8 erfährt im Bereich der Stufenkontur 81 eine sprunghafte Änderung. Darüber hinaus ändert sich der Abstand D aber auch kontinuierlich aufgrund der spiralförmig umlaufenden Kontur der Drehzahlscheibe 8. Der zu messende Abstand D ist somit variabel.

Entsprechendes trifft analog auf die axiale Drehzahlerfassung nach Figur 5 zu, gemäß welcher die Abstandsmessung der sich drehenden Drehzahlscheibe 8 in axialer Richtung, zum Beispiel parallel zu der Rotationsachse R, erfolgt. Die Drehzahlscheibe 8 ist helixförmig oder schraubenförmig ausgestaltet, sodass sich der Abstand D zwischen dem Drehzahlsensor 9 und einer Oberfläche der Drehzahlscheibe 8, welche dem Drehzahlsensor 9 zugewandt ist, ändert. Insbesondere erfolgt eine solche Änderung kontinuierlich bis eine sprunghafte Änderung im Bereich Stufenkontur 81 erfasst wird. Der zu messende Abstand D ist somit auch gemäß einer solchen Ausrichtung der Drehzahlsensoreinheit 10 variabel. Insbesondere bei einer solchen axialen Drehzahlerfassung, kann der Drehzahlsensor 9 zum Beispiel in einem vorhandenen Freiraum in dem Motorgehäuse 7 angeordnet sein und eine Drehung der außen gelagerten Drehzahlscheibe 8 erfassen. In Figur 2 ist eine Anordnung des Drehzahlsensors 9 zum Beispiel im Bereich zwischen dem Ringmotor 6 und der Drehzahlscheibe 8 möglich. Das Motorgehäuse 7 kann dann zum Beispiel in Richtung hin zu der Drehzahlscheibe 8 eine Öffnung aufweisen, die eine zuverlässige Drehzahlmessung ermöglicht. Darüber hinaus kann die Antriebsvorrichtung 5 auch zwei oder mehr Drehzahlsensoren 9 und Drehzahlscheiben 8 umfassen, sodass zum Beispiel eine axiale und eine radiale Drehzahlerfassung möglich ist.

Mittels der beschriebenen Antriebsvorrichtung 5 ist ein zuverlässiges Antriebskonzept für Elektrofahrräder realisierbar, welches einen besonders und platzsparenden Aufbau ermöglicht. Die Antriebsvorrichtung 5 ist insbesondere zur Montage an ein Unterrohr oder an ein Sitzrohr des Elektrofahrrads 1 geeignet und ermöglicht ein vorteilhaftes Antriebssystem insbesondere hinsichtlich einer hohen Effizienz und einer kleinen Baugröße.

### Bezugszeichenliste

- 1: Fahrrad
- 2: Fahrradrahmen
- 3: Rahmenabschnitt
- 4: Tretkurbel
- 5: Antriebsvorrichtung
- 6: Motoreinheit
- 7: Motorgehäuse
- 8: Drehzahlscheibe
- 81: Stufenkontur
- 9: Drehzahlsensor
- 10: Drehzahlsensoreinheit
- 11: erstes Teilelement der Tretkurbelwelle
- 12: zweites Teilelement der Tretkurbelwelle
- 13: Schraubenelement der Tretkurbelwelle
- 14: Drehmomentsensor
- 15: Planetengetriebe
- 16: Kettenblattsystem
- 17: Abdeckung

- D: Messabstand zwischen Drehzahlsensor und Drehzahlscheibe
- D1: erster Durchmesser der Tretkurbelwelle
- D2: zweiter Durchmesser der Tretkurbelwelle
- D3: dritter Durchmesser der Tretkurbelwelle
- D4: vierter Durchmesser der Tretkurbelwelle
- R: Rotationsachse der Motoreinheit / der Tretkurbel

## Patentansprüche

1. Antriebsvorrichtung (5) für ein Elektrofahrrad (1), aufweisend:
- eine Motoreinheit (6) mit einem Elektromotor zum Antreiben des Elektrofahrrads (1),
- eine Tretkurbelwelle (11, 12), die um eine Rotationsachse (R) drehbar ist, und
- ein Getriebe (15), das zum Antreiben des Elektrofahrrads (1) ausgebildet und einerseits mit der Motoreinheit (6) und anderseits mit der Tretkurbelwelle (11, 12) gekoppelt ist und dazu eingerichtet ist, ein Drehmoment zum Antreiben des Elektrofahrrads (1) abzugeben, wobei die Tretkurbelwelle (11, 12) zweiteilig ausgebildet ist und ein erstes Teilelement (11) und ein zweites Teilelement (12) aufweist, die miteinander gekoppelt sind, wobei die Motoreinheit als Ringmotor (6) ausgebildet ist und in Bezug auf die Rotationsachse (R) der Tretkurbelwelle (11, 12) koaxial um diese angeordnet ist, sodass der Ringmotor (6) die Tretkurbelwelle (11, 12) koaxial umgibt, **dadurch gekennzeichnet dass** die Tretkurbelwelle (11, 12) einen Lagersitz für den Ringmotor (6) ausbildet.

2. Antriebsvorrichtung (5) nach Anspruch 1, bei der das Getriebe als Planetengetriebe (15) mit einem Sonnenrad und mindestens einem Planetenrad ausgebildet ist und in Bezug auf die Rotationsachse (R) der Tretkurbelwelle (11, 12) koaxial um diese angeordnet ist, sodass das Planentengetriebe (15) die Tretkurbelwelle (11, 12) koaxial umgibt.

3. Antriebsvorrichtung (5) nach Anspruch 2, bei der die Tretkurbelwelle (11, 12) einen Lagersitz für das Planetengetriebe (15) ausbildet.

4. Antriebsvorrichtung (5) nach einem der vorhergehenden Ansprüche, bei der die Tretkurbelwelle (11, 12) bezogen auf die Rotationsachse (R) in einem mittleren Abschnitt schmaler ausgebildet ist als in einem Endabschnitt.

5. Antriebsvorrichtung (5) nach Anspruch 4, bei der die Tretkurbelwelle (11, 12) in dem mittleren Abschnitt einen Durchmesser (D2, D3) von einschließlich 15-23 mm und in dem Endabschnitt einen Durchmesser (D1, D4) von einschließlich 23-35 mm aufweist.

6. Antriebsvorrichtung (5) nach einem der vorhergehenden Ansprüche, bei der das erste Teilelement (11) und/oder das zweite Teilelement (12) zumindest in einem Kopplungsbereich hülsenförmig ausgebildet sind und sich zumindest eines der beiden Teilelemente (11, 12) in das andere erstreckt.

7. Antriebsvorrichtung (5) nach einem der vorhergehenden Ansprüche, bei der das erste Teilelement (11) und das zweite Teilelement (12) mittels einer Kopplungsstruktur (13) miteinander gekoppelt sind, welche die beiden Teilelemente (11, 12) formschlüssig, kraftschlüssig und/oder stoffschlüssig miteinander koppelt.

8. Antriebsvorrichtung (5) nach einem der vorhergehenden Ansprüche, aufweisend:
eine Drehzahlsensoreinheit (10), die einen Drehzahlsensor (9) und eine Drehzahlscheibe (8) umfasst, wobei die Drehzahlscheibe (8) um die Rotationsachse (R) drehbar mit der Tretkurbelwelle (11, 12) gekoppelt ist.

9. Antriebsvorrichtung (5) nach Anspruch 8, bei der die Drehzahlscheibe (8) in Bezug auf die Rotationsachse (R) eine spiralförmige oder eine helixförmige Kontur aufweist und die Drehzahlsensor (9) in Abhängigkeit von der Kontur der Drehzahlscheibe (8) so angeordnet ist, dass in Bezug auf die Rotationsachse (R) eine radiale oder axiale Drehzahlerfassung eingerichtet ist.

10. Antriebsvorrichtung (5) nach Anspruch 8 oder 9, aufweisend:
ein Motorgehäuse (7), in dem die Motoreinheit (6) und das Getriebe (15) angeordnet sind und durch das sich die Tretkurbelwelle (11, 12) erstreckt, wobei die Drehzahlscheibe (8) in Bezug auf die Rotationsachse (R) außerhalb des Motorgehäuses (7) angeordnet ist.

11. Antriebsvorrichtung (5) nach Anspruch 10, aufweisend:
einen Drehmomentsensor (14), der in Bezug auf die Rotationsachse (R) außerhalb des Motorgehäuses (7) angeordnet ist.

12. Antriebsvorrichtung (5) nach Anspruch 11, aufweisend:
ein Kettenblattsystem (16), das zum Antreiben des Elektrofahrrads (1) mit der Tretkurbelwelle (11, 12) gekoppelt ist, wobei der Drehmomentsensor (14) in dem Kettenblattsystem (16) integriert ist.

13. Elektrofahrrad (1) aufweisend:
- einen Fahrradrahmen (2) mit einem unteren Rahmenabschnitt (3), der sich zu einem Tretlager erstreckt, welches eine Tretkurbel (4) aufweist, und
- eine Antriebsvorrichtung (5) nach einem der vorhergehenden Ansprüche, die zum Antreiben des Elektrofahrrads (1) mit dem Fahrradrahmen (2) gekoppelt ist, sodass die Tretkurbelwelle (11, 12) mit der Tretkurbel (4) gekoppelt ist.

## Claims

1. Drive device (5) for an electric bicycle (1), comprising:
- a motor unit (6) with an electric motor for driving the electric bicycle (1),
- a pedal crank shaft (11, 12) that is rotatable about an axis of rotation (R), and
- a gearbox (15) configured to drive the electric bicycle (1), coupled on one side to the motor unit (6) and on the other side to the pedal crank shaft (11, 12), and configured to deliver torque for driving the electric bicycle (1), wherein the pedal crank shaft (11, 12) is designed in two parts and comprises a first sub-element (11) and a second sub-element (12) that are coupled to one another, wherein the motor unit is designed as a ring motor (6) and is arranged coaxially with respect to the axis of rotation (R) of the pedal crank shaft (11, 12) so that the ring motor (6) coaxially surrounds the pedal crank shaft (11, 12), **characterized in that** the pedal crank shaft (11, 12) forms a bearing seat for the ring motor (6).

2. Drive device (5) according to claim 1, wherein the gearbox is designed as a planetary gearbox (15) with a sun gear and at least one planet gear and is arranged coaxially with respect to the axis of rotation (R) of the pedal crank shaft (11, 12) so that the planetary gearbox (15) surrounds the pedal crank shaft (11, 12) coaxially.

3. Drive device (5) according to claim 2, wherein the pedal crank shaft (11, 12) forms a bearing seat for the planetary gearbox (15).

4. Drive device (5) according to one of the preceding claims, wherein the pedal crank shaft (11, 12) is narrower in a central section than in an end section relative to the axis of rotation (R).

5. Drive device (5) according to claim 4, wherein the pedal crank shaft (11, 12) has a diameter (D2, D3) of 15-23 mm inclusive in the middle section and a diameter (D1, D4) of 23-35 mm inclusive in the end section.

6. Drive device (5) according to one of the preceding claims, wherein the first sub-element (11) and/or the second sub-element (12) are sleeve-shaped at least in a coupling region, and at least one of the two sub-elements (11, 12) extends into the other.

7. Drive device (5) according to one of the preceding claims, wherein the first sub-element (11) and the second sub-element (12) are coupled to one another by means of a coupling structure (13) which couples the two sub-elements (11, 12) to one another by form fit, force fit, and/or material bond.

8. Drive device (5) according to one of the preceding claims, comprising:
a speed sensor unit (10) comprising a speed sensor (9) and a speed disc (8), wherein the speed disc (8) is rotatably coupled to the pedal crank shaft (11, 12) about the axis of rotation (R).

9. Drive device (5) according to claim 8, wherein the speed disc (8) has a spiral-shaped or helical contour relative to the axis of rotation (R), and the speed sensor (9) is arranged in dependence on the contour of the speed disc (8) such that radial or axial speed detection is configured relative to the axis of rotation (R).

10. Drive device (5) according to claim 8 or 9, comprising: a motor housing (7), in which the motor unit (6) and the gearbox (15) are arranged and through which the pedal crank shaft (11, 12) extends, wherein the speed disc (8) is arranged outside the motor housing (7) with respect to the axis of rotation (R).

11. Drive device (5) according to claim 10, comprising: a torque sensor (14) arranged outside the motor housing (7) with respect to the axis of rotation (R).

12. Drive device (5) according to claim 11, comprising:
a chainring system (16) coupled to the pedal crank shaft (11, 12) for driving the electric bicycle (1), wherein the torque sensor (14) is integrated into the chainring system (16).

13. An electric bicycle (1) comprising:
- a bicycle frame (2) having a lower frame section (3) extending to a bottom bracket comprising a pedal crank (4), and
- a drive device (5) according to one of the preceding claims, which is coupled to the bicycle frame (2) for driving the electric bicycle (1) such that the pedal crank shaft (11, 12) is coupled to the pedal crank (4).

## Revendications

1. Dispositif d'entraînement (5) pour un vélo électrique (1), comprenant :
- une unité motrice (6) comportant un moteur électrique destiné à entraîner le vélo électrique (1),
- un arbre de pédalier (11, 12) pouvant tourner autour d'un axe de rotation (R), et
- une transmission (15) conçue pour entraîner le vélo électrique (1), couplée d'une part à l'unité motrice (6) et d'autre part à l'arbre de pédalier (11, 12), et agencée pour délivrer un couple destiné à entraîner le vélo électrique (1), l'arbre de pédalier (11, 12) est constitué de deux parties et comporte un premier élément partiel (11) et un deuxième élément partiel (12) qui sont couplés l'un à l'autre, l'unité motrice étant conçue comme un moteur annulaire (6) et étant disposée coaxialement par rapport à l'axe de rotation (R) de l'arbre de pédalier (11, 12) autour de celui-ci, de sorte que le moteur annulaire (6) entoure coaxialement l'arbre de pédalier (11, 12), **caractérisé en ce que** l'arbre de pédalier (11, 12) forme un logement de palier pour le moteur annulaire (6).

2. Dispositif d'entraînement (5) selon la revendication 1, dans lequel la transmission est conçue comme un engrenage planétaire (15) comprenant une roue solaire et au moins un pignon planétaire et est disposée coaxialement par rapport à l'axe de rotation (R) de l'arbre de pédalier (11, 12) de manière à ce que l'engrenage planétaire (15) entoure l'arbre de pédalier (11, 12) de manière coaxiale.

3. Dispositif d'entraînement (5) selon la revendication 2, dans lequel l'arbre de pédalier (11, 12) forme un logement de palier pour l'engrenage planétaire (15).

4. Dispositif d'entraînement (5) selon l'une des revendications précédentes, dans lequel l'arbre de pédalier (11, 12) est plus étroit dans une partie centrale que dans une partie d'extrémité par rapport à l'axe de rotation (R).

5. Dispositif d'entraînement (5) selon la revendication 4, dans lequel l'arbre de pédalier (11, 12) présente, dans la partie centrale, un diamètre (D2, D3) compris entre 15 et 23 mm inclus, et, dans la partie d'extrémité, un diamètre (D1, D4) compris entre 23 et 35 mm inclus.

6. Dispositif d'entraînement (5) selon l'une des revendications précédentes, dans lequel le premier élément partiel (11) et/ou le deuxième élément partiel (12) sont de forme tubulaire au moins dans une zone d'accouplement et au moins l'un des deux éléments partiels (11, 12) s'étend dans l'autre.

7. Dispositif d'entraînement (5) selon l'une des revendications précédentes, dans lequel le premier élément partiel (11) et le deuxième élément partiel (12) sont couplés l'un à l'autre au moyen d'une structure de couplage (13) qui couple les deux éléments partiels (11, 12) par complémentarité de forme, par adhérence et/ou par liaison de matière.

8. Dispositif d'entraînement (5) selon l'une des revendications précédentes, comprenant :
une unité de capteur de vitesse de rotation (10) comprenant un capteur de vitesse de rotation (9) et un disque de vitesse de rotation (8), le disque de vitesse de rotation (8) étant couplé de manière rotative autour de l'axe de rotation (R) à l'arbre de pédalier (11, 12).

9. Dispositif d'entraînement (5) selon la revendication 8, dans lequel le disque de vitesse de rotation (8) présente un contour en spirale ou hélicoïdal par rapport à l'axe de rotation (R) et le capteur de vitesse de rotation (9) est disposé en fonction du contour du disque de vitesse de rotation (8) de telle sorte qu'une détection de vitesse radiale ou axiale est mise en place par rapport à l'axe de rotation (R).

10. Dispositif d'entraînement (5) selon la revendication 8 ou 9, comprenant :
un carter de moteur (7), dans lequel sont disposées l'unité motrice (6) et la transmission (15) et à travers lequel s'étend l'arbre de pédalier (11, 12), le disque de vitesse de rotation (8) étant disposé à l'extérieur du carter de moteur (7) par rapport à l'axe de rotation (R).

11. Dispositif d'entraînement (5) selon la revendication 10, comprenant : un capteur de couple (14) qui est disposé à l'extérieur du carter de moteur (7) par rapport à l'axe de rotation (R).

12. Dispositif d'entraînement (5) selon la revendication 11, comprenant :
un système de plateau (16) couplé à l'arbre de pédalier (11, 12) pour entraîner le vélo électrique (1), le capteur de couple (14) étant intégré dans le système de plateau (16).

13. Vélo électrique (1) comprenant :
- un cadre de vélo (2) comportant une partie inférieure (3) s'étendant jusqu'à un boîtier de pédalier qui comporte une manivelle (4), et
- un dispositif d'entraînement (5) selon l'une des revendications précédentes, qui est couplé au cadre de vélo (2) pour entraîner le vélo électrique (1), de sorte que l'arbre de pédalier (11, 12) est couplé à la manivelle (4).
